# FASCICULE DE BREVET EUROPEEN

(11) **EP 0 580 535 B1**
(45) Date de publication et mention de la délivrance du brevet: **28.05.1997**
(21) Numéro de dépôt: 93450006.7
(22) Date de dépôt: 21.07.1993
(51) Int. Cl.: F17C 1/16, B29C 53/60

(54) **Recipient pour le stockage de fluide sous pression, à rupture sans fragmentation**
Lagerbehälter für Druckfluide, welche ohne zersplittern zerreissen können
Storage vessel for a fluid under pressure, being able to burst without disintegration

(30) Priorité: 23.07.1992 FR 9209323
(43) Date de publication de la demande: 26.01.1994
(73) Titulaire: AEROSPATIALE Société Nationale Industrielle, 75781 Paris Cédex 16 (FR)
(72) Inventeur: Coquet, Pascal D., F-33700 Merignac (FR); Schaeffner, Pierre, F-33185 Le Haillan (FR)
(74) Mandataire: Thébault, Jean-Louis

(56) Documents cités:
- EP-A- 0 191 655
- US-A- 3 486 655
- US-A- 3 655 085

## Description

La présente invention se rapporte à des récipients pour le stockage de fluide sous pression et plus particulièrement, bien que non exclusivement, à des récipients du type bouteille de stockage de gaz, tels que de l'air, de l'oxygène, de l'azote, du gaz carbonique, utilisés dans différents secteurs industriels.

L'invention vise plus précisément encore les bouteilles du type comportant une enveloppe intérieure de forme de révolution autour d'un axe longitudinal, présentant une partie cylindrique ou virole et deux parties d'extrémité dont l'une au moins est bombée vers l'extérieur, et entourée d'un frettage de fibres résistantes enrobées d'un liant approprié.

Lorsque de tels récipients se rompent, c'est généralement au droit de la virole, laquelle s'ouvre brutalement, ce qui entraîne un risque de fragmentation de ladite enveloppe. Cette dernière étant généralement un métal, ce qui est le cas lorsque le récipient contient un gaz sous haute pression, une telle rupture risque de projeter des fragments métalliques dangereux pour les personnes susceptibles de se trouver à proximité.

Une norme officielle récente impose d'ailleurs pour ce type de récipient, notamment de satisfaire un essai de rupture sous pression entraînant une rupture sans fragmentation du corps du récipient.

La présente invention a précisément pour but de proposer un récipient de ce type répondant aux exigences de cette norme officielle.

Un tel type de récipient est par exemple décrit dans EP-A-O 191 655 qui concerne un procédé de bobinage à l'aide, d'une part, de fibres circonférentielles et, d'autre part, de fibres longitudinales passant toutes sur les parties bombées d'extrémité du récipient.

A cet effet, l'invention a pour objet un récipient pour le stockage de fluide sous pression, du type comportant une enveloppe intérieure de forme de révolution autour d'un axe longitudinal, présentant une partie centrale cylindrique ou virole et deux parties d'extrémité, au moins l'une desdites parties d'extrémité étant bombée vers l'extérieur, un frettage de fibres résistantes enrobées d'un liant thermoplastique ou thermodurcissable entourant ladite enveloppe et présentant, en regard de la virole, au moins une couche de fibres déposées circonférentiellement, dites fibres circonférentielles, et au moins une couche de fibres, dites fibres longitudinales, déposées de manière planaire sous un angle de bobinage aussi faible que possible en sorte de laisser dégagée, à ladite partie d'extrémité bombée, une calotte centrée sur ledit axe longitudinal, caractérisé en ce que ladite virole comporte, en outre, au moins une couche de fibres déposées de manière planaire ou hélicoïdale avec un angle de bobinage compris entre celui desdites fibres longitudinales et 90°.

Alors que dans les récipients de type connu la résistance à l'éclatement est apportée essentiellement par les fibres dites circonférentielles, les fibres dites longitudinales, déposées selon un bobinage planaire ou géodésique et destinées pour l'essentiel à absorber les efforts axiaux, présentant un angle de bobinage par rapport à l'axe longitudinal du récipient trop faible pour reprendre les efforts de rupture circonférentielle par éclatement, un récipient conforme à l'invention est susceptible de satisfaire aux exigences légales d'éclatement sans fragmentation de l'enveloppe interne, du fait que les efforts de rupture ne sont plus supportés exclusivement par les couches circonférentielles, mais sont repris en partie par ladite couche de fibres déposée sous un angle intermédiaire entre 90° et celui desdites fibres longitudinales et qui prennent en quelque sorte le relais des couches circonférentielles, lors de la rupture du récipient.

Avantageusement, ladite couche de fibres déposées de manière planaire ou hélicoïdale, présente un angle de bobinage égal à 90° moins l'angle de bobinage desdites fibres longitudinales.

De préférence encore, il est prévu plusieurs couches de fibres déposées de manière planaire ou hélicoïdale, présentant des angles de bobinage différents, par exemple étagés entre la valeur 90° et celle desdites fibres longitudinales.

De telles couches participent activement à la reprise des efforts de rupture en prenant le relais des fibres circonférentielles, une fois celles-ci rompues, à tour de rôle en fonction de leur angle de bobinage respectif.

Ainsi, au lieu d'avoir un éclatement brutal, on obtient une rupture en cascade des fibres circonférentielles puis des fibres déposées conformément à l'invention, en commençant par les fibres d'angle de bobinage le plus proche de 90°, conduisant à une éventration "douce" du récipient, sans fragmentation de l'enveloppe interne, conformément notamment aux exigences posées par les normes officielles.

D'autres caractéristiques et avantages ressortiront de la description qui va suivre d'un mode de réalisation préféré d'un récipient selon l'invention, description donnée à titre d'exemple uniquement et en regard des dessins annexés sur lesquels :
- Figures 1a et 1b sont des schémas illustrant les modes de bobinage planaire et hélicoïdal respectivement et,
- Figure 2 est une vue illustrant le mode de dépose des fibres conformément à l'invention sur un cylindre tel qu'une virole de récipient.

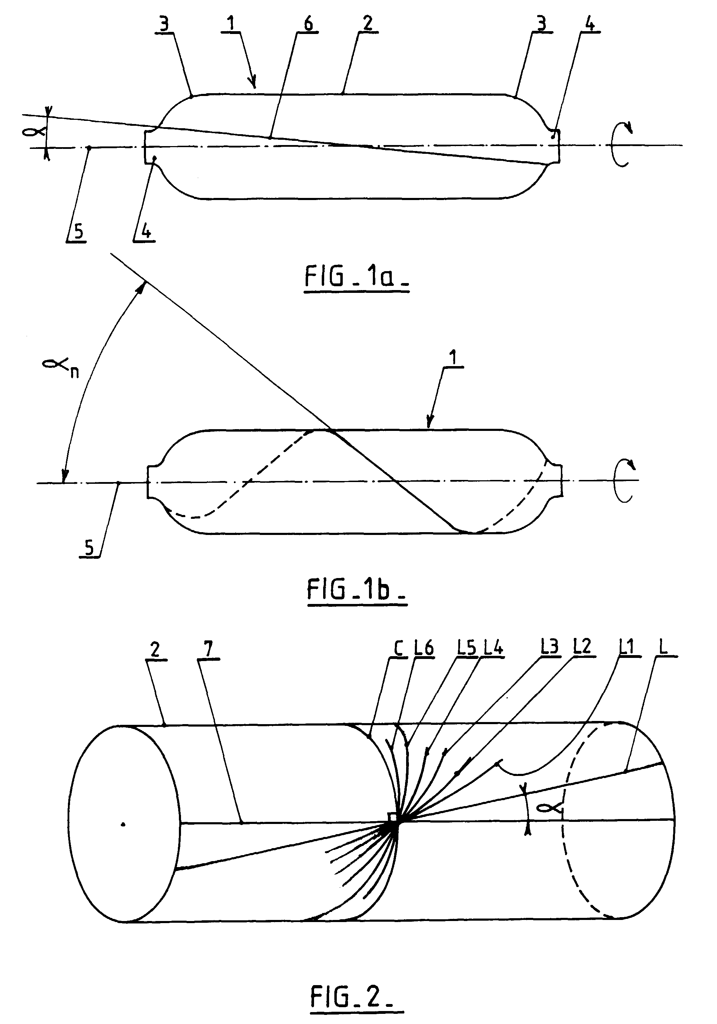

Sur les figures 1a et 1b on a représenté schématiquement en 1 un récipient constitué d'un corps central cylindrique ou virole 2, prolongé à ses deux extrémités par un embout 3 bombé vers l'extérieur et présentant un bossage 4 de révolution, coaxial à l'axe 5 de la virole 2.

Dans la figure 1a, la dépose d'une fibre symbolisée en 6 est dite planaire ou planétaire en ce sens que la bobine déroulant la fibre 6 se déplace toujours dans un même plan lors du bobinage du récipient 1, lequel tourne autour de son axe 5.

L'angle α que fait le plan dans lequel se déplace ladite bobine en tournant autour du récipient, par rapport audit axe 5, est dénommé angle de bobinage.

Compte-tenu de l'existence des bossages 4 aux extrémités, lesquels ne doivent pas être recouverts, l'angle α représenté sur la figure 1a, correspondant à une dépose des fibres au ras des bossages 4, est l'angle minimal de bobinage.

Pour des récipients du type de ceux concernés par la présente invention, il existe nécessairement, au moins à l'une des extrémités, un tel bossage 4 sur lequel est rapporté un embout de raccordement (non représenté) pour le remplissage et le vidage du récipient.

Cet angle α minimal dépend de la morphologie et des dimensions des récipients. Pour les récipients ou bouteilles du type usuel , il est de l'ordre de 20° environ.

Les bouteilles du type à enveloppe interne ou liner métallique recouvert d'un frettage de fibres résistantes enrobées d'un liant approprié, comprennent, d'une part, des couches de fibres déposées suivant le mode de bobinage illustré par la figure 1a, dénommées fibres longitudinales et présentant un angle de bobinage α par exemple de l'ordre de 20° et, d'autre part, des couches de fibres déposées circonférentiellement à la virole de la bouteille.

Ces bouteilles peuvent constituer un danger en cas d'éclatement accidentel. En effet, dans ces récipients, seules les fibres dites circonférentielles sont capables de résister aux efforts de rupture par éclatement, les fibres dites longitudinales n'opposant pas une grande résistance du fait que les contraintes de rupture en cas d'éclatement s'exercent essentiellement sur la virole et engendrent des efforts de traction circonférentiels que les fibres longitudinales, étant donné leur inclinaison, ne peuvent reprendre.

Il en résulte une rupture brutale des fibres circonférentielles, lorsque leur limite de résistance est atteinte, susceptible de conduire à la fragmentation de l'enveloppe interne métallique et à la projection d'éclats.

Conformément à l'invention, à un recouvrement traditionnel de l'enveloppe interne ou liner, notamment un liner métallique, à l'aide, d'une part, de fibres déposées au droit de la virole circonférentiellement et, d'autre part, de fibres déposées longitudinalement, on va substituer un recouvrement incluant non seulement des fibres déposées circonférentiellement et longitudinalement mais également des fibres déposées selon un ou plusieurs angles intermédiaires entre l'angle de bobinage desdites fibres circonférentielles et l'angle de bobinage desdites fibres longitudinales.

Sur la figure 2 on a représenté schématiquement la virole 2 d'un récipient à enveloppe interne.

Sur cette virole 2 sont déposées diverses couches de fibres.

En C est représentée une fibre déposée circonférentiellement et qui forme avec une génératrice 7 de la virole 2 un angle pratiquement égal à 90°. En L est représentée une fibre de type longitudinal déposée sous un angle minimal α par rapport à ladite génératrice.

Conformément à l'invention sont prévues des fibres déposées suivant des angles intermédiaires entre 90° et α, les fibres étant également dénommées fibres longitudinales et affectées d'un indice différent selon leur angle de dépose.

Sur la figure 2 sont représentées six fibres respectivement L₁ à L₆, présentant des angles de dépose α₁ à α₆ respectivement, de valeurs croissantes étagées entre α et 90°.

Ainsi, les couches de fibres longitudinales L à L₆ présentent entre elles un gradient de contrainte ou de tenue à l'éclatement progressive, la contrainte maximale admissible par les fibres déposées suivant l'angle α₆ (le plus près de 90°) étant sensiblement inférieure à celle des fibres circonférentielles C, mais sensiblement supérieure à celle des fibres déposées sous l'angle α₅, lesquelles présentent elles-mêmes une contrainte sensiblement supérieure à celle des fibres déposées sous α₄, et ainsi de suite.

Le résultat est qu'en cas de rupture des fibres circonférentielles C, ce sont les fibres L₆ qui encaissent d'abord le choc, puis, celles-ci lâchant, les fibres L₅, entraînant ainsi une rupture en chaîne de toutes les fibres longitudinales, conduisant à une rupture de la virole du type déboutonnage, c'est-à-dire à une éventration "douce", sans fragmentation de l'enveloppe interne.

On peut prévoir un seul angle de dépose entre les valeurs 90° et α, auquel cas il est préférable que cet angle ait une valeur sensiblement égale à 90° - α.

De préférence, on prévoit plusieurs angles dont les valeurs sont étagées, régulièrement ou non, par exemple entre la valeur α et la valeur 90° - α.

On peut néanmoins déposer des fibres longitudinales avec un angle de bobinage intermédiaire entre 90° et 90° - α.

Suivant un mode de mise en oeuvre destiné à répartir sensiblement en deux parts égales les efforts circonférentiels de rupture, entre, d'une part, les fibres circonférentielles C et, d'autre part, l'ensemble des fibres longitudinales (L,L₁,L₂,L₃...), on peut prévoir, en sus de l'angle minimal α de dépose, neuf angles de dépose α₁ à α₉ pour neuf couches de fibres L₁ à L₉.

L'angle de dépose α₈ de la couche L₈ est par exemple égal à 90° - α et l'angle de dépose α₉ est compris entre 90° et 90° - α.

Dans le cas d'un récipient à extrémités hemisphériques, on peut envisager une distribution des fibres Lₙ en éventail avec des angles de dépose échelonnés entre 90° et α tout en permettant une dépose des fibres de manière géodésique sur lesdites extrémités.

Le nombre d'angles de dépose des fibres longitudinales Lₙ peut varier dans une large mesure, de même que le nombre de couches de fibres déposées sous le même angle, ainsi que le nombre et l'étagement des couches de fibres déposées suivant les différents angles possibles (L,Lₙ,C), selon la morphologie, les dimensions, la nature du récipient, la nature du matériau constitutif de l'enveloppe (métal ou matière thermoplastique, ou élastomère, par exemple), la nature des fibres (verre, carbone, Kevlar, par exemple) et du liant de la matrice (matériau thermodurcissable ou thermoplastique).

Selon l'angle (αₙ) de dépose, les fibres longitudinales (Lₙ) selon l'invention sont mises en place, soit par un bobinage planaire (figure 1a), soit par un bobinage hélicoïdal (figure 1b).

Il est à noter que la mise en oeuvre de l'invention n'implique pas nécessairement un surdimensionnement de la paroi du récipient, c'est-à-dire l'adjonction de couches supplémentaires de fibres longitudinales. En effet, préférentiellement on mettra en oeuvre le même nombre de couches de fibres longitudinales, pour un type de bouteille donné, que dans le mode de fabrication conventionnel, mais ce nombre de couches sera réparti sur les différentes couches déposées avec les différents angles considérés (α,α₁,α₂,α₃ etc...).

Ainsi, la masse totale et l'épaisseur de paroi d'une telle bouteille selon l'invention seront identiques à celles d'une même bouteille réalisée selon la technique antérieure.

L'invention s'applique à tout récipient notamment du type bouteille, à fond ou extrémités bombés vers l'extérieur, quelle que soit la forme de ceux-ci, hemisphérique, semi-elliptique, oval de Cassini.

Sur ces extrémités bombées, la dépose se fera autant que possible de manière géodésique, par tout procédé.

La forme de ces extrémités pourra bien entendu être aménagée, optimisée, en fonction du nombre et des angles de dépose des diverses fibres longitudinales.

## Revendications

1. Récipient pour le stockage de fluide sous pression, du type comportant une enveloppe intérieure de forme de révolution autour d'un axe longitudinal (5), présentant une partie centrale cylindrique ou virole (2) et deux parties d'extrémité (3), au moins l'une desdites parties d'extrémité étant bombée vers l'extérieur, un frettage de fibres résistantes enrobées d'un liant thermoplastique ou thermodurcissable entourant ladite enveloppe et présentant, en regard de la virole (2), au moins une couche de fibres déposées circonférentiellement, dites fibres circonférentielles (C), et au moins une couche de fibres, dites fibres longitudinales (L), déposées de manière planaire sous un angle de bobinage aussi faible que possible en sorte de laisser dégagée, à ladite partie d'extrémité bombée (3), une calotte (4) centrée sur ledit axe longitudinal, caractérisé en ce que ladite virole (2) comporte, en outre, au moins une couche de fibres (Lₙ) déposées de manière planaire ou hélicoïdale avec un angle de bobinage (αₙ) compris entre celui (α) desdites fibres longitudinales et 90°.

2. Récipient suivant la revendication 1, caractérisé en ce que ladite couche de fibres (Lₙ) déposées de manière planaire ou hélicoïdale présente un angle de bobinage (αₙ) égal à 90° - celui (α) desdites fibres longitudinales.

3. Récipient suivant la revendication 1, caractérisé en ce qu'il comporte plusieurs couches de fibres (L₁,L₂,L₃,...) déposées de manière planaire ou hélicoïdale, présentant des angles de bobinage différents (α₁,α₂,α₃...).

4. Récipient suivant la revendication 3, caractérisé en ce que lesdits angles de bobinage différents (α₁,α₂,α₃...) s'échelonnent entre 90° et l'angle de bobinage (α) desdites fibres longitudinales (L).

5. Récipient suivant la revendication 3, caractérisé en ce que lesdits angles de bobinage différents (α₁,α₂,α₃...) présentent, l'un, une valeur égale à 90° - l'angle (α) de bobinage desdites fibres longitudinales (L), les autres étant répartis de part et d'autre de celle valeur.

6. Récipient suivant l'une des revendications 1 à 5, caractérisé en ce qu'il comporte plusieurs couches de fibres circonférentielles (C), plusieurs couches de fibres longitudinales (L) et plusieurs couches de fibres (Lₙ) d'angle(s) de bobinage compris entre 90° et l'angle (α) de bobinage des fibres longitudinales (L), selon un étagement alterné suivant une modalité quelconque.

## Claims

1. Receptacle for storing fluid under pressure, of the type having an internal casing with a shape generated by rotation about a longitudinal axis (5), having a cylindrical central part or barrel (2) and two end parts (3), at least one of the said end parts being curved outwards, a reinforcement of strong fibres coated with a thermoplastic or thermosetting binder surrounding the said casing and having, opposite the barrel (2), at least one layer of fibres disposed circumferentially, referred to as circumferential fibres (C), and at least one layer of fibres, referred to as longitudinal fibres (L), disposed in a planar manner at a winding angle as low as possible so at to leave clear, at the said curved end part (3), a cap (4) centred on the said longitudinal axis, characterised in that the said barrel (2) also has at least one layer of fibres (Lₙ) laid in a planar or helical manner with a winding angle (αₙ) lying between that (α) of the said longitudinal fibres and 90°.

2. Receptacle according to Claim 1, characterised in that the said layer of fibres (Lₙ) laid in a planar or helical manner has a winding angle (αₙ) equal to 90° minus that (α) of the said longitudinal fibres.

3. Receptacle according to Claim 1, characterised in that it has several layers of fibres (L₁, L₂, L₃, ...) laid in a planar or helical manner, having different winding angles (α₁, α₂, α₃, ...).

4. Receptacle according to Claim 3, characterised in that the said different winding angles (α₁, α₂, α₃, ...) range between 90° and the winding angle (α) of the said longitudinal fibres (L).

5. Receptacle according to Claim 3, characterised in that the said different winding angles (α₁, α₂, α₃, ...) have, in one case, a value equal to 90° minus the winding angle (α) of the said longitudinal fibres (L), the others being distributed on either side of this value.

6. Receptacle according to one of Claims 1 to 5,
characterised in that it has several layers of circumferential fibres (C), several layers of longitudinal fibres (L) and several layers of fibres (Lₙ) with winding angle(s) lying between 90° and the winding angle (α) of the longitudinal fibres (L), in alternate steps according to any arrangement.

## Patentansprüche

1. Lagerbehälter für Druckfluide eines Typs umfassend einen rotationssymmetrisch zu einer Längsachse (5) ausgebildeten Innenmantel, der einen mittleren zylindrischen Abschnitt oder Ring (2) und zwei Endabschnitte (3) aufweist, wobei wenigstens einer der besagten Endabschnitte nach außen gewölbt ist, eine besagten Mantel umgebende Umschnürung aus widerstandsfähigen Fasern, umhüllt von einem thermo- oder duroplastischen Bindemittel, die in bezug auf den Ring (2) wenigstens eine Schicht aus in Umfangsrichtung angeordneten Fasern, als Umfangsfasern (C) bezeichnet, und wenigstens eine Schicht aus Fasern, als Längsfasern (L) bezeichnet, aufweist, die in planarer Weise unter einem möglichst kleinen Wickelwinkel derart angeordnet sind, daß an besagtem gewölbtem Endabschnitt (3) eine zu besagter Längsachse zentrierte Kalotte (4) frei bleibt, dadurch gekennzeichnet, daß besagter Ring (2) zudem wenigstens eine Schicht aus Fasern (Lₙ) umfaßt, die planar oder schraubenförmig mit einem Wickelwinkel (αₙ) zwischen demjenigen (α) der Längsfasern und 90° angeordnet sind.

2. Behälter nach Anspruch 1, dadurch gekennzeichnet, daß besagte Schicht aus planar oder schraubenförmig angeordneten Fasern (Lₙ) einen Wickelwinkel (αₙ) gleich 90° - demjenigen (α) besagter Längsfasern aufweist.

3. Behälter nach Anspruch 1, dadurch gekennzeichnet, daß er mehrere Schichten von Fasern (L₁, L₂, L₃, ...) umfaßt, die eben oder schraubenförmig mit unterschiedlichen Wickelwinkeln (α₁, α₂, α₃, ...) angeordnet sind.

4. Behälter nach Anspruch 3, dadurch gekennzeichnet, daß besagte unterschiedliche Wickelwinkel (α₁, α₂, α₃, ...) zwischen 90° und dem Wickelwinkel (α) besagter Längsfasern (L) abgestuft sind.

5. Behälter nach Anspruch 3, dadurch gekennzeichnet, daß von den besagten unterschiedlichen Wickelwinkeln (α₁, α₂, α₃, ...) die einen einen Winkel gleich 90° - Wickelwinkel (α) besagter Längsfasern (L) und die anderen auf beiden Seiten dieses Wertes verteilt sind.

6. Behälter nach einem der Ansprüche 1 bis 5, dadurch gekennzeichnet, daß er mehrere Schichten von umfänglichen Fasern (C), mehrere Schichten von Längsfasern (L) und mehrere Schichten von Fasern (Lₙ) mit (einem) Wickelwinkel(n) zwischen 90° und dem Wickelwinkel (α) von Längsfasern (L) entsprechend einer stufenweisen Anordnung gemäß irgendeiner Modifikation aufweist.
